# EUROPEAN PATENT APPLICATION

(11) **EP 2 354 545 A1**
(43) Date of publication of application: **10.08.2011**
(21) Application number: 10195040.0
(22) Date of filing: 15.12.2010
(51) Int. Cl.: F03D 11/00, F03D 1/00, B23B 41/12, B23B 29/02

(54) **Systems and methods for assembling a bore repair assembly for use in a wind turbine**

(30) Priority: 31.12.2009 US 651078
(71) Applicant: General Electric Company, Schenectady, NY 12345 (US)
(72) Inventor: Smith, Alistair Jeffrey, Sudbury Ontario P3E 5T8 (CA); Jones, Douglas Jerome, Cincinnati, OH 45215 (US); Plummer, Jeremy Clayton, Erie, PA 16531 (US); Madge, James Henry, Greenville, SC 29615 (US); Marsden, Keith Alan, Erie, PA 16504 (US); Demo, Wayne Alan, Cincinnati, OH 45215 (US)
(74) Representative: Bedford, Grant Richard

(57) **Abstract**

A bore repair assembly (100) for repairing a gearbox assembly (46) of a wind turbine (10), the gearbox assembly defining a first bearing bore (76) and a second bearing bore (78) coaxially aligned with the first bearing bore to define a central bearing axis is provided. The bore repair assembly includes a first support assembly (102) adapted to be coupled with respect to the second bearing bore, a boring bar (104) rotatably coupled to the first support assembly, the boring bar positioned coaxially with the first bearing bore and the second bearing bore, and a boring bar drive assembly (108) coupled to the boring bar for rotating the boring bar about the central bearing axis.

## Description

The subject matter described herein relates generally to methods and systems for assembling a bore repair assembly for use in a wind turbine.

At least some known wind turbine towers include a nacelle fixed atop a tower. The nacelle includes a rotor assembly coupled to a generator through a shaft. In known rotor assemblies, a plurality of blades extend from a rotor. The blades are oriented such that wind passing over the blades turns the rotor and rotates the shaft, thereby driving the generator to generate electricity.

Because many known wind turbines provide electrical power to utility grids, at least some wind turbines have larger components (e.g., rotors in excess of thirty-meters in diameter) that facilitate supplying greater quantities of electrical power. However, the larger components are often subjected to increased loads (e.g., asymmetric loads) that result from wind shears, yaw misalignment, and/or turbulence, and the increased loads have been known to contribute to significant fatigue cycles on the gearbox assembly and/or other components of the wind turbine.

At least some known wind turbines include an electric generator and a gearbox each positioned within the nacelle. The electric generator is coupled to the gearbox with a high speed shaft. At least some known gearbox assemblies facilitate transferring rotational energy from a low speed rotor shaft to a high speed shaft that rotatably drives the generator to facilitate producing electrical power. Over time, the bearings which support the high speed shaft may become worn. As the bearings become worn, the gearbox assembly becomes less effective in transferring rotational energy to the generator. In some cases, the bearings can fail which results in damage to the bearing bores. In at least some known wind turbines, the distance between the gearbox assembly and the generator is such that a repair of the bearing bores requires the entire nacelle, gearbox, and/or generator to be removed from the wind turbine prior to removing the bearing and repairing the damaged bearing bore to desired dimensions. In some wind turbines, the blades are between 60 and 100 meters in length, and as such, repairing worn or damaged bearing bores can be costly and time-consuming.

Accordingly, it is desirable to provide a system and method capable of repairing the gearbox assembly uptower without removing the nacelle, generator, and/or gearbox from the wind turbine.

In one aspect according to the present invention, a method of assembling a bore repair assembly for use with a wind turbine is provided. The wind turbine includes a gearbox assembly that defines a first bearing bore and a second bearing bore coaxially aligned with the first bearing bore. The method includes coupling a first support assembly with respect to the second bearing bore. A boring bar is positioned coaxially within the first bearing bore and through the second bearing bore. The boring bar is rotatably coupled to the first support assembly. A boring bar drive assembly is coupled to the boring bar for rotating the boring bar about a central bearing axis.

In another aspect, a bore repair assembly for repairing a gearbox assembly of a wind turbine is provided. The gearbox assembly defines a first bearing bore and a second bearing bore coaxially aligned with the first bearing bore to define a central bearing axis. The bore repair assembly includes a first support assembly adapted to be coupled with respect to the second bearing bore. A boring bar is rotatably coupled to the first support assembly. The boring bar is positioned coaxially with the first bearing bore and the second bearing bore. A boring bar drive assembly is coupled to the boring bar for rotating the boring bar about the central bearing axis.

In yet another aspect, a repair support system for use with a repair device for repairing a gearbox assembly of a wind turbine is provided. The gearbox assembly defines a first bearing bore and a second bearing bore coaxially aligned with the first bearing bore to define a central bearing axis. The repair support system includes a first support assembly adapted to be coupled with respect to the second bearing bore for positioning a repair device coaxially with the first bearing bore and the second bearing bore.

Certain embodiments described herein facilitate repairing a gearbox assembly without requiring the nacelle to be removed from the wind turbine. More specifically, various aspects of the bore repair assembly described herein facilitate repairing a high speed bearing bore to include predetermined dimensions without removing the nacelle, generator, and/or gearbox from the wind turbine.

Various aspects and embodiments of the present invention will now be described in connection with the accompanying drawings, in which:
Fig. 1 is a perspective view of an exemplary wind turbine.
Fig. 2 is an enlarged sectional view of a portion of the wind turbine shown in Fig. 1.
Fig. 3 is a partial perspective view of an exemplary gearbox suitable for use in the wind turbine shown in Fig. 1.
Fig. 4 is an enlarged partial perspective view of the gearbox shown in Fig. 3.
Fig. 5 is a schematic view of an exemplary bore repair assembly suitable for use with the wind turbine shown in Fig. 1.
Fig. 6 is a partial perspective view of the bore repair assembly shown in Fig. 5.
Fig. 7 is another partial perspective view of the bore repair assembly shown in Fig. 5.
Fig. 8 is a perspective view of an exemplary bore sleeve suitable for use with the bore repair assembly shown in Fig. 5.

The embodiments described herein include a wind turbine system that enables the maintenance of the gearbox assembly without requiring the nacelle, generator, and/or gearbox assembly of the wind turbine to be removed. More specifically, aspects of the bore repair assembly described herein enable the high speed bearing bore and/or output shaft to be repaired uptower.

As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power. As used herein, the term "uptower" is intended to be representative of any location of the wind turbine that is above a supporting surface of a wind turbine tower.

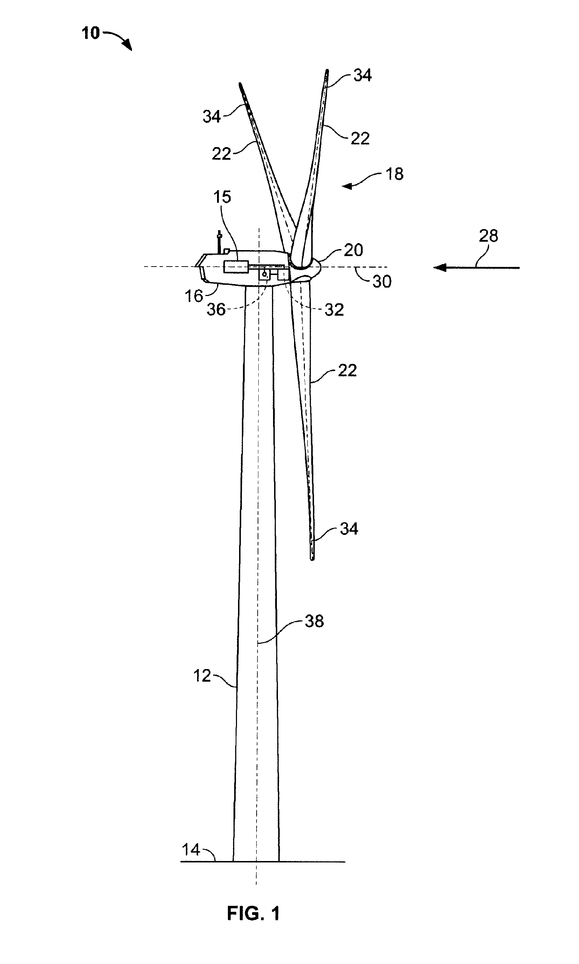

Figure 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support system 14, a nacelle 16 mounted on tower 12, a generator 15 positioned within nacelle 16, and a rotor 18 that is rotatably coupled to generator 15. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Figure 1) that extends between support system 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. In the exemplary embodiment, rotor blades 22 have a length ranging from about 30 meters (m) (99 feet (ft)) to about 120 m (394 ft). Alternatively, rotor blades 22 may have any suitable length that enables wind turbine 10 to function as described herein. For example, other non-limiting examples of blade lengths include 10 m or less, 20 m, and 37 m, or a length that is greater than 120 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position. Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axis 34 for rotor blades 22 are shown.

In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

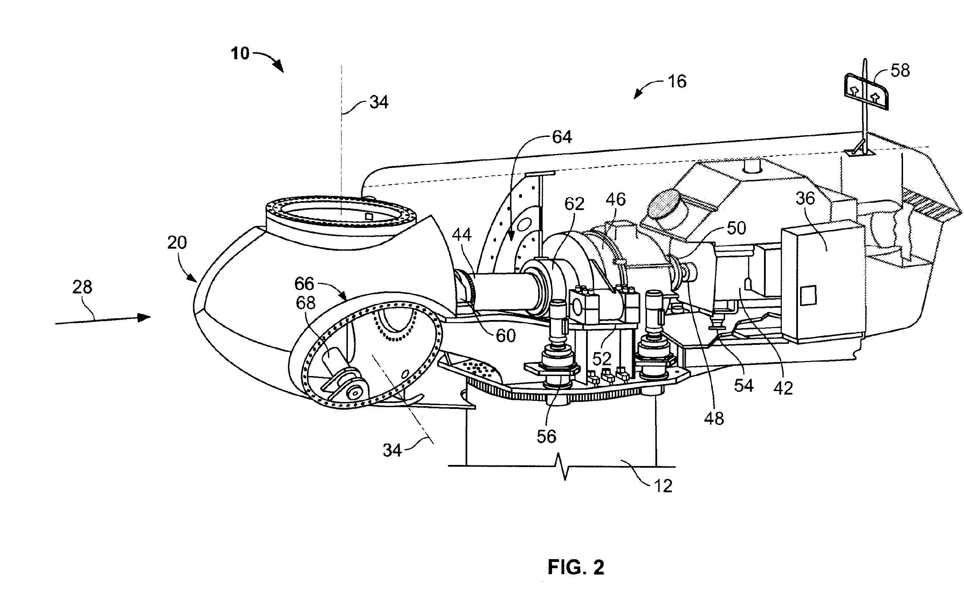

Figure 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a main support frame 52 and a generator frame 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Figure 1) to control the perspective of rotor blades 22 with respect to direction 28 of the wind. Nacelle 16 also includes at least one meteorological mast 58 that includes a wind vane and anemometer (neither shown in Figure 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, main support frame 52 and/or generator frame 54, and forward support bearing 60 and aft support bearing 62, are sometimes referred to as a drive train 64. In the exemplary embodiment, hub 20 includes a pitch assembly 66 that includes one or more pitch drive systems 68. Each pitch drive system 68 is coupled to a respective rotor blade 22 (shown in Figure 1) for modulating the blade pitch of associated rotor blade 22 along pitch axis 34. Only one of three pitch drive systems 68 is shown in Figure 2.

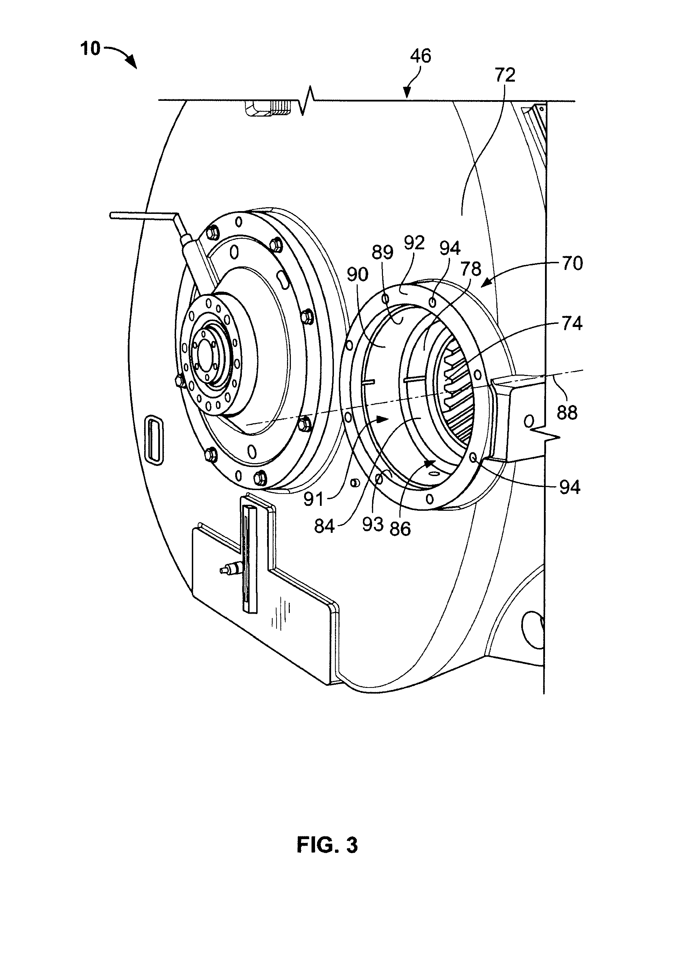

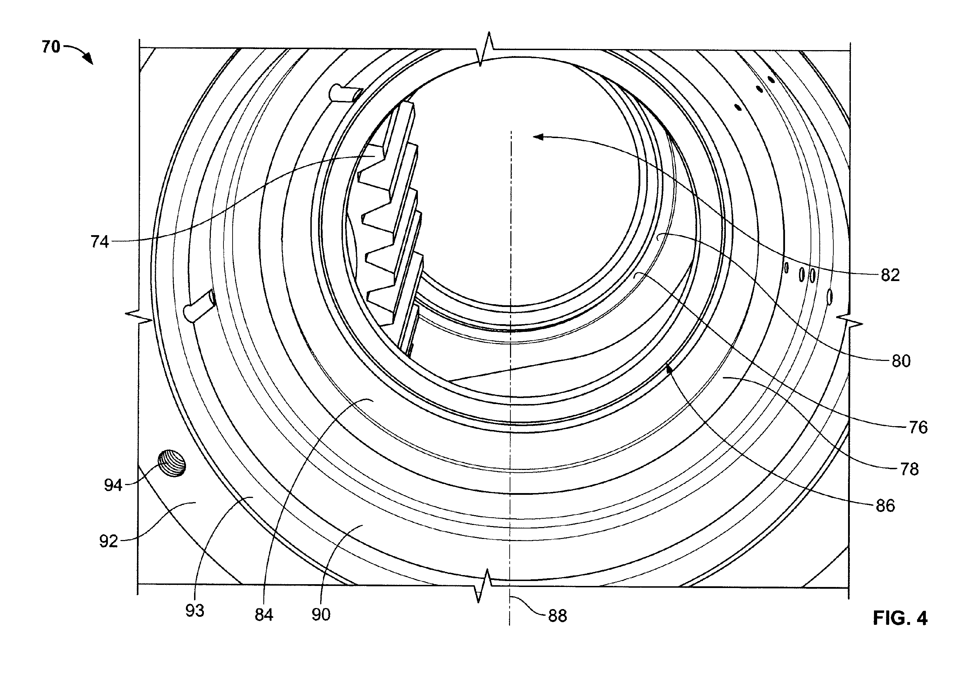

Figure 3 is a partial perspective view of gearbox 46 suitable for use in wind turbine 10. Figure 4 is an enlarged partial perspective view of gearbox 46. Identical components shown in Figure 4 are labeled with the same reference numbers used in Figure 2. In the exemplary embodiment, gearbox 46 includes a high speed bore assembly 70 positioned within a housing 72. High speed bore assembly 70 is configured to support a plurality of high speed bearings (not shown) positioned within high speed bore assembly 70. High speed shaft 48 (shown in Figure. 2) is positioned within high speed bore assembly 70 and is rotatably coupled to the plurality of high speed bearings. High speed shaft 48 includes a high speed pinion (not shown) that is coupled to a high speed gear 74, such that the rotation of high speed gear 74 rotates high speed shaft 48.

In the exemplary embodiment, high speed bore assembly 70 includes a first or forward bearing bore 76, a second or minor tapered roller bearing (TRB) bore 78, and a third or major TRB bore 90. Forward bearing bore 76 includes an inner surface 80 that defines a forward opening 82 having a substantially circular shape. Minor TRB bore 78 includes an inner surface 84 that defines an opening 86 having a substantially circular shape. Forward bearing bore 76 is coaxially aligned with minor TRB bore 78 along a shaft centerline axis 88 that extends between and through forward bearing bore 76 and minor TRB bore 78 and through a center of forward opening 82 and opening 86. High speed gear 74 is positioned between forward bearing bore 76 and minor TRB bore 78. A high speed pinion (not shown) is between forward bearing bore 76 and minor TRB bore 78 and in contact with high speed gear 74.

High speed bore assembly 70 is formed such that minor TRB bore 78 is positioned between major TRB bore 90 and forward bearing bore 76. Major TRB bore 90 includes an inner surface 89 that defines an opening 91 having a substantially circular shape. Major TRB bore 90 is coaxially aligned with minor TRB bore 78 and forward bearing bore 76 such that shaft centerline axis 88 extends through a center of major TRB bore 90. High speed bore assembly 70 includes a bearing cap flange 92 positioned adjacent major TRB bore 90 such that major TRB bore 90 is positioned between minor TRB bore 78 and bearing cap flange 92. An O-ring seal groove 93 is defined within major TRB bore 90. A plurality of openings 94 are defined and extend through bearing cap flange 92 to facilitate coupling a bearing cap (not shown) to bearing cap flange 92 using a plurality of fasteners, such as a bolt, screw, and/or clip.

During operation of wind turbine 10, as high speed gear 74 imparts rotational movement to high speed shaft 48, the high speed bearings may wear and/or fail over time. In the event of a bearing failure, minor TRB bore 78 becomes damaged, such that the dimensions of minor TRB bore 78 are no longer within a predefined tolerance. As a result, minor TRB bore 78 must be repaired to a suitable diameter, such as a predetermined diameter, sufficient to receive a high speed bearing.

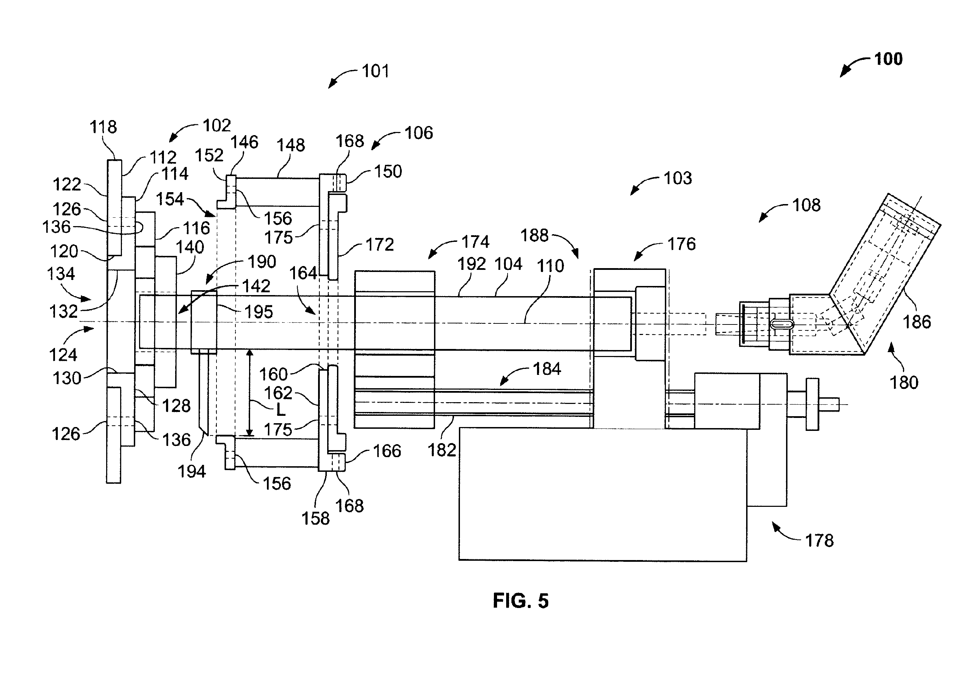

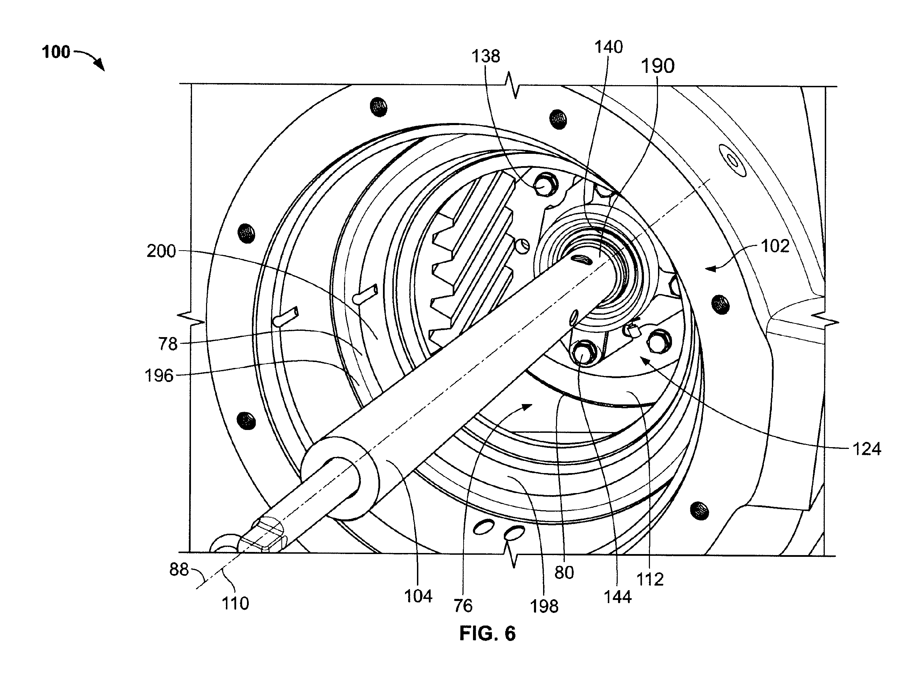

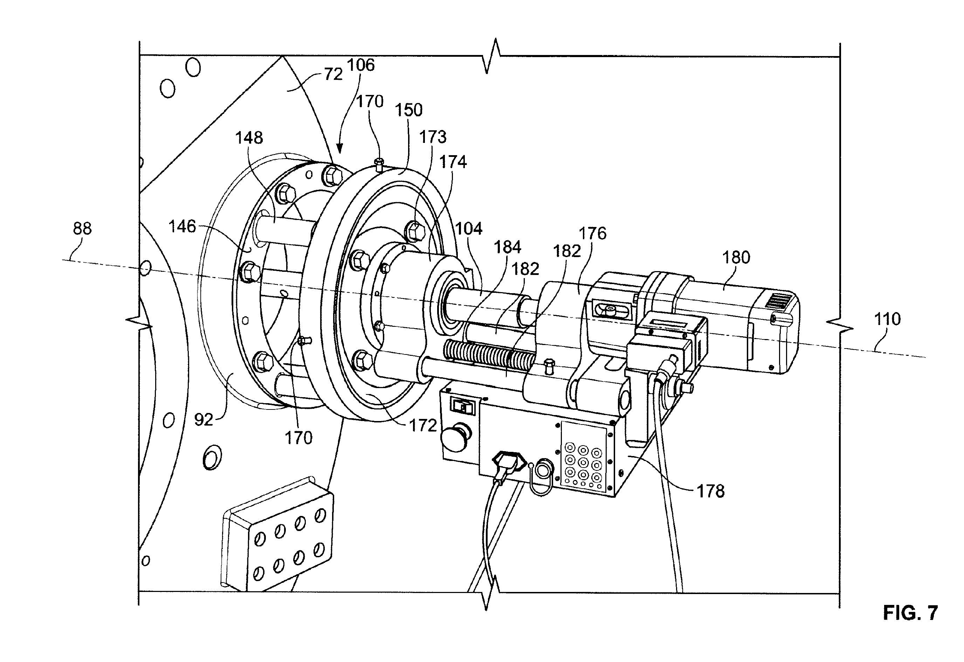

Figure 5 is a schematic view of an exemplary bore repair assembly 100 suitable for use with wind turbine 10. Figure 6 is a partial perspective view of bore repair assembly 100. Figure 7 is another partial perspective view of bore repair assembly 100. Identical components shown in Figure 6 and Figure 7 are labeled with the same reference numbers used in Figure 3 and Figure 5. In the exemplary embodiment, bore repair assembly 100 includes repair support system 101 coupled to a repair device assembly 103. Repair support system 101 includes a first or forward support assembly 102 and an adapter assembly 106. Repair device assembly 103 includes a boring bar 104 and a boring bar drive assembly 108 coupled to boring bar 104. In the exemplary embodiment, boring bar 104 is rotatably coupled to forward support assembly 102. Boring bar drive assembly 108 is coupled to boring bar 104 and to adapter assembly 106. Boring bar drive assembly 108 is configured to rotate boring bar 104 about a bore axis 110, and to move boring bar 104 axially along bore axis 110.

In the exemplary embodiment, forward support assembly 102 includes a ring extension flange 112, a support member 114, and a boring bar support 116. Ring extension flange 112 includes a wall 122 having an outer surface 118 and a radially inner surface 120. Inner surface 120 defines a substantially circular central opening 124. A plurality of openings 126 extend through wall 122 and are positioned circumferentially about central opening 124. Support member 114 includes a support wall 128 that includes a shoulder 130 and an inner surface 132 that defines an opening 134. Support member 114 is coupled to ring extension flange 112 such that shoulder 130 is inserted through central opening 124 and is positioned adjacent to inner surface 120. A plurality of openings 136 are defmed through support member 114 that are aligned with corresponding openings 126. Support member 114 is coupled to ring extension flange 112 with a plurality of bolts 138 (shown in Figure. 6) inserted through openings 126 and openings 136. Boring bar support 116 includes a bearing 140 that defines a substantially circular bearing opening 142. Boring bar support 116 is coupled to support member 114 with a plurality of bolts 144 (shown in Figure. 6). Boring bar 104 is inserted into bearing opening 142 and is supported by bearing 140 such that boring bar 104 is rotatable about bore axis 110.

In the exemplary embodiment, adapter assembly 106 includes a support ring 146, at least one extension member 148 coupled to support ring 146, and an adapter plate 150 coupled to extension member 148. Support ring 146 includes a substantially circular member 152 that defines an opening 154. Member 152 includes a plurality of openings 156 extending through member 152 and positioned circumferentially about opening 154 for coupling adapter assembly 106 to bearing cap flange 92. Extension member 148 is coupled to support ring 146 and extends axially from support ring 146 substantially parallel to bore axis 110. Adapter plate 150 has an outer surface 158 and a radial inner surface 160. An adapter member 162 extends between inner surface 160 and outer surface 158. Inner surface 160 defines an opening 164 sized to receive boring bar 104 therethrough. Adapter member 162 includes an outer support ring 166 that extends axially from outer surface 158 parallel to bore axis 110. A plurality of openings 168 are defined through outer support ring 166 and extend radially through outer support ring 166. Each opening 168 is sized to receive a positioning screw 170 (shown in Figure. 7) such that positioning screw 170 is oriented substantially perpendicular to bore axis 110. A boring bar drive support member 172 is coupled to adapter plate 150 with a plurality of bolts 173 (shown in Figure. 7) inserted through corresponding openings 175 defined within boring bar drive support member 172. Boring bar drive support member 172 is further coupled to outer support ring 166 with positioning screw 170 for adjusting the position of boring bar drive support member 172.

In the exemplary embodiment, boring bar drive assembly 108 includes a forward mounting support member 174, a boring bar drive support 176, an axial drive assembly 178, and a boring bar drive system 180. At least one guide rod 182 is coupled to and extends between forward mounting support member 174 and axial drive assembly 178. Boring bar drive support 176 is slideably coupled to guide rod 182 for moving axially along a length of guide rod 182. Axial drive assembly 178 is coupled to boring bar drive support 176 for moving boring bar drive support 176 axially along guide rod 182. A screw shaft 184 is rotatably coupled to and extends between axial drive assembly 178 and forward mounting support member 174. Axial drive assembly 178 imparts rotational motion to screw shaft 184. Boring bar drive support 176 is coupled to screw shaft 184 such that boring bar drive support 176 is translated axially along screw shaft 184 upon rotation of screw shaft 184. Boring bar 104 is coupled to boring bar drive support 176 such that boring bar 104 is translated axially along bore axis 110 upon movement of boring bar drive support 176. Boring bar drive system 180 is coupled to boring bar 104 for rotating boring bar 104 about bore axis 110. In the exemplary embodiment, boring bar drive system 180 includes an angled drive motor 186 coupled to boring bar 104.

In the exemplary embodiment, boring bar 104 includes a root end 188, a tip end 190, and a body 192 extending between root end 188 and tip end 190. A boring tool 194 is coupled to boring bar 104 at or near tip end 190. Boring tool 194 has a length L extending radially outward from boring bar 104. In one embodiment, boring tool 194 includes a single point cutting tool, a fly cutter, or any suitable cutting tool to enable bore repair assembly 100 to function as described herein. A boring tool holder 195 is positioned circumferentially around boring bar 104 and is coupled to boring tool 194 and to boring bar 104. Boring bar 104 is inserted though forward mounting support member 174 and through forward support assembly 102 such that tip end 190 is inserted into opening 142 of forward support assembly 102. Root end 188 is coupled to boring bar drive support 176 and to boring bar drive system 180.

Referring to Figures 6 and 7, in the exemplary embodiment, forward support assembly 102 is coupled within forward bearing bore 76 such that forward support central opening 124 is concentrically aligned with forward bearing bore 76 and is coaxially aligned with minor TRB bore 78. Ring extension flange 112 is positioned within forward bearing bore 76 such that ring extension flange 112 is in contact with inner surface 80 defining forward bearing bore 76. Tip end 190 is inserted into forward support central opening 124 such that boring bar 104 is coaxially aligned with forward bearing bore 76 and minor TRB bore 78. Positioned within forward support central opening 124, tip end 190 is axially aligned along centerline axis 88. Boring tool 194 is coupled to boring bar 104 at or near tip end 190 and extends radially outward from boring bar 104 such that at least a portion of boring tool 194 is in contact with minor TRB bore 78. Boring tool holder 195 is coupled to boring tool 194 and to boring bar 104 for facilitating reducing movement of boring tool 194 relative to boring bar 104. Adapter assembly 106 is coupled to gearbox housing 72 such that opening 164 is coaxially aligned with forward bearing bore 76. Specifically, support ring 146 is coupled to bearing cap flange 92. Boring bar 104 is inserted through opening 164 and is coupled to boring bar drive assembly 108 such that boring bar 104 is axially aligned along centerline axis 88. More specifically, forward mounting support member 174 is coupled to boring bar drive support member 172. Positioning screws 170 are coupled to outer support ring 166 and to boring bar drive support member 172 for adjusting a radial alignment of boring bar 104. Boring tool 194 is coupled to boring bar 104 and is positioned within minor TRB bore 78. Boring tool 194 has length L from boring bar 104 such that boring tool 194 is in contact with a forward radial face 196 of minor TRB bore 78.

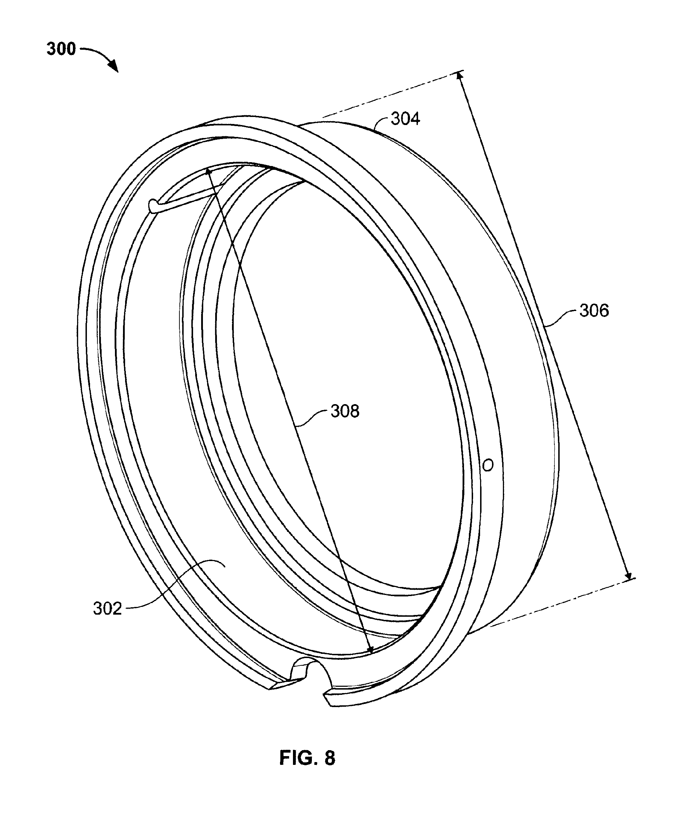

During repair of minor TRB bore 78, boring bar drive assembly 108 rotates boring bar 104 about centerline axis 88 and moves boring bar 104 axially along centerline axis 88. As boring bar 104 rotates and moves axially along centerline axis 88, boring tool 194 contacts minor TRB bore 78 to axially remove a portion of a material 200 defining a first inner surface 198 having a first diameter. As material 200 is removed by boring tool 194, a second inner surface (not shown) having a second diameter is formed, wherein the second diameter is larger than the first diameter. The first diameter is substantially equal to a predefined outer diameter of a high speed bearing. A bore sleeve 300 (shown in Figure. 8) is inserted into minor TRB bore 78 having a second diameter and coupled to minor TRB bore 78.

Figure 8 is a perspective view of exemplary bore sleeve 300. In the exemplary embodiment, bore sleeve 300 has an inner surface 302 and an outer surface 304. Outer surface 304 has an outer diameter 306 that is slightly less than the second diameter of minor TRB bore 78 such that bore sleeve 300 is sized to be inserted into minor TRB bore 78. Inner surface 302 has an inner diameter 308 that is substantially equal to the first diameter of minor TRB bore 78 such that a high speed bearing may be coupled to bore sleeve 300 within minor TRB bore 78. In the exemplary embodiment, bore sleeve 300 is coupled to minor TRB bore 78 with a friction fit. In an alternative embodiment, bore sleeve 300 is coupled within minor TRB bore 78 using a fastener, weld, and/or any suitable device suitable to enable wind turbine 10 to function as described herein.

Various of the above-described systems and methods facilitate repairing a gearbox assembly uptower of the wind turbine without requiring removal of the nacelle, the generator, and/or the gearbox assembly. More specifically, the bore repair assembly described herein facilitates repairing a high speed bearing bore while maintaining predefined dimensions. The ability to maintain the gearbox assembly without removing the nacelle, the generator, and/or the gearbox from the wind turbine eliminates the need for lifting cranes required to remove the nacelle. As such, the cost and manpower required to maintain the gearbox assembly in a wind turbine is significantly reduced. Reducing such costs extends the operational life expectancies of wind turbine gearbox assemblies.

Exemplary embodiments of a bore repair assembly and methods for assembling the bore repair assembly for use in a wind turbine are described above in detail. The assemblies and methods are not limited to the specific embodiments described herein, but rather, components of the assemblies and/or steps of the methods may be utilized independently and separately from other components and/or steps described herein. For example, the methods may also be used in combination with other gearbox assemblies, and are not limited to practice with only the wind turbine systems as described herein. Rather, the exemplary embodiment can be implemented and utilized in connection with many other gearbox assembly applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method of assembling a bore repair assembly for use with a wind turbine including a gearbox assembly, the gearbox assembly defining a first bearing bore and a second bearing bore coaxially aligned with the first bearing bore, said method comprising:
   coupling a first support assembly with respect to the second bearing bore;
   positioning a boring bar coaxially within the first bearing bore and the second bearing bore;
   rotatably coupling the boring bar to the first support assembly; and,
   coupling a boring bar drive assembly to the boring bar for rotating the boring bar about a central bearing axis.
2. A method in accordance with any preceding clause 1, wherein the gearbox includes a gearbox housing, said method further comprising:
   coupling an adapter assembly to the gearbox housing; and,
   coupling the boring bar drive assembly to the adapter assembly for supporting the boring bar drive assembly.
3. A method in accordance with any preceding clause, further comprising:
   coupling an adapter plate to the gearbox housing;
   coupling a support member to the adapter plate, wherein the support member includes an opening aligned concentrically with the first bearing bore and the second bearing bore;
   coupling the boring bar drive assembly to the support member; and,
   inserting the boring bar through the support member opening.
4. A method in accordance with any preceding clause, further comprising:
   coupling an expansion member to the second bearing bore;
   coupling a support bearing to the expansion member for supporting the boring bar; and,
   coupling the boring bar to the support bearing for rotating the boring bar about the central bearing axis.
5. A method in accordance with any preceding clause, wherein the first bearing bore has an inner surface having a first diameter, said method further comprising coupling a boring tool to the boring bar, wherein the boring tool contacts the inner surface, and the boring bar drive assembly is configured to rotate the boring bar to facilitate machining the inner surface to a second diameter that is larger than the first diameter.
6. A method in accordance with any preceding clause, further comprising coupling a bore sleeve within the second bearing bore, wherein the bore sleeve has an inner surface having a diameter that is substantially equal to the first diameter.
7. A bore repair assembly for repairing a gearbox assembly of a wind turbine, the gearbox assembly defining a first bearing bore and a second bearing bore coaxially aligned with the first bearing bore to define a central bearing axis, said bore repair assembly comprising:
   a first support assembly adapted to be coupled with respect to the second bearing bore;
   a boring bar rotatably coupled to said first support assembly, said boring bar positioned coaxially with the first bearing bore and the second bearing bore; and,
   a boring bar drive assembly coupled to said boring bar for rotating said boring bar about the central bearing axis.
8. A bore repair assembly in accordance with any preceding clause, wherein the gearbox includes a gearbox housing, said bore repair assembly further comprising an adapter assembly coupled to said gearbox housing and to said boring bar drive assembly for supporting said boring bar drive assembly.
9. A bore repair assembly in accordance with any preceding clause, wherein said adapter assembly comprises:
   an adapter plate coupled to and extending from said gearbox housing; and,
   a support member coupled to said adapter plate and to said boring bar drive assembly, wherein said support member defines an opening aligned coaxially with the first bearing bore and the second bearing bore, and said boring bar is coupled to said boring bar drive assembly through said opening.
10. A bore repair assembly in accordance with any preceding clause, wherein said adapter assembly further comprises at least one positioning screw inserted through said adapter plate for positioning said support member.
11. A bore repair assembly in accordance with any preceding clause, wherein said first support assembly comprises a support bearing aligned coaxially with the second bearing bore, said support bearing coupled to said boring bar for rotating said boring bar about the central bearing axis.
12. A bore repair assembly in accordance with any preceding clause, wherein said first support assembly further comprises an expansion member coupled with respect to the second bearing bore, said support bearing coupled to said expansion member for supporting said boring bar.
13. A bore repair assembly in accordance with any preceding clause, wherein the first bearing bore has an inner surface having a first diameter, said bore repair assembly further comprises a boring tool coupled to and extending from said boring bar, wherein said boring tool contacts the inner surface, and said boring bar drive assembly is configured to rotate said boring bar to facilitate machining the inner surface to a second diameter that is larger than the first diameter.
14. A bore repair assembly in accordance with any preceding clause, further comprising a bore sleeve coupled to the second bearing bore, said bore sleeve having an inner surface with a diameter that is substantially equal to the first diameter.
15. A repair support system for use with a repair device for repairing a gearbox assembly of a wind turbine, the gearbox assembly defining a first bearing bore and a second bearing bore coaxially aligned with the first bearing bore to define a central bearing axis, said repair support system comprising a first support assembly adapted to be coupled with respect to the second bearing bore for positioning a repair device coaxially with the first bearing bore and the second bearing bore.
16. A repair support system in accordance with any preceding clause, wherein the gearbox includes a gearbox housing, said repair support system further comprising an adapter assembly adapted to be coupled to the gearbox housing to support the repair device such that the repair device is coaxially aligned with the first bearing bore and the second bearing bore.
17. A repair support system in accordance with any preceding clause, wherein said first support assembly further comprises an expansion member adapted to be coupled with respect to the second bearing bore for supporting said first support assembly within the second bearing bore.
18. A repair support system in accordance with any preceding clause, wherein said first support assembly further comprises a support bearing coupled to said expansion member, said support bearing aligned coaxially with the second bearing bore and the first bearing bore, said support bearing adapted to be coupled to the repair device.
19. A repair support system in accordance with any preceding clause, wherein said adapter assembly comprises:
   an adapter plate adapted to be coupled to and extend from the gearbox housing; and,
   a support member coupled to said adapter plate, said support member adapted to be coupled to the repair device, wherein said support member defines an opening aligned coaxially with the first bearing bore and the second bearing bore.
20. A repair support system in accordance with any preceding clause, further comprising at least one positioning screw inserted through said adapter plate for positioning said support member such that said support member opening is aligned coaxially with the first bearing bore and the second bearing bore.

## Claims

1. A bore repair assembly (100) for repairing a gearbox assembly (46) of a wind turbine (10), the gearbox assembly defining a first bearing bore (76) and a second bearing bore (78) coaxially aligned with the first bearing bore to define a central bearing axis, said bore repair assembly comprising:
a first support assembly (102) adapted to be coupled with respect to the second bearing bore;
a boring bar (104) rotatably coupled to said first support assembly, said boring bar positioned coaxially with the first bearing bore and the second bearing bore; and,
a boring bar drive assembly (108) coupled to said boring bar for rotating said boring bar about the central bearing axis.

2. A bore repair assembly (100) in accordance with claim 1, wherein the gearbox (46) includes a gearbox housing (72), said bore repair assembly further comprising an adapter assembly (106) coupled to said gearbox housing and to said boring bar drive assembly (108) for supporting said boring bar drive assembly.

3. A bore repair assembly (100) in accordance with claim 2, wherein said adapter assembly (106) comprises:
an adapter plate (150) coupled to and extending from said gearbox housing (72); and,
a support member (114) coupled to said adapter plate and to said boring bar drive assembly (108), wherein said support member defines an opening (126) aligned coaxially with the first bearing bore (76) and the second bearing bore (78), and said boring bar is coupled to said boring bar drive assembly through said opening.

4. A bore repair assembly (100) in accordance with claim 3, wherein said adapter assembly (106) further comprises at least one positioning screw (170) inserted through said adapter plate (150) for positioning said support member (114).

5. A bore repair assembly (100) in accordance with any preceding claim, wherein said first support assembly (102) comprises a support bearing (60) aligned coaxially with the second bearing bore (78), said support bearing coupled to said boring bar (104) for rotating said boring bar about the central bearing axis.

6. A bore repair assembly (100) in accordance with any preceding claim, wherein said first support assembly (102) further comprises an expansion member coupled with respect to the second bearing bore (78), said support bearing coupled to said expansion member for supporting said boring bar (104).

7. A bore repair assembly (100) in accordance with any preceding claim, wherein the first bearing bore (76) has an inner surface (80) having a first diameter (308), said bore repair assembly further comprises a boring tool (194) coupled to and extending from said boring bar, wherein said boring tool contacts the inner surface (302), and said boring bar drive assembly (108) is configured to rotate said boring bar to facilitate machining the inner surface to a second diameter (306) that is larger than the first diameter.

8. A bore repair assembly (100) in accordance with claim 7, further comprising a bore sleeve (300) coupled to the second bearing bore (78), said bore sleeve having an inner surface (302) with a diameter that is substantially equal to the first diameter (308).

9. A repair support system (101) for use with a repair device (103) for repairing a gearbox assembly (46) of a wind turbine (10), the gearbox assembly defining a first bearing bore (76) and a second bearing bore (78) coaxially aligned with the first bearing bore to define a central bearing axis, said repair support system (101) comprising a first support assembly (102) adapted to be coupled with respect to the second bearing bore for positioning a repair device (103) coaxially with the first bearing bore and the second bearing bore.

10. A repair support system (101) in accordance with claim 9, wherein the gearbox (46) includes a gearbox housing (72), said repair support system further comprising an adapter assembly (106) adapted to be coupled to the gearbox housing to support the repair device (103) such that the repair device is coaxially aligned with the first bearing bore (76) and the second bearing bore (78).
